Europäisches Patentamt

European Patent Office

Office européen des brevets

(19)

(11) Veröffentlichungsnummer: **0 105 365**
**B1**

(12)

# EUROPÄISCHE PATENTSCHRIFT

(45) Veröffentlichungstag der Patentschrift:
**28.12.88**

(21) Anmeldenummer: **83901916.3**

(22) Anmeldetag: **12.03.83**

(86) Internationale Anmeldenummer:
**PCT/EP 83/00073**

(87) Internationale Veröffentlichungsnummer:
**WO 83/03292 (29.09.83 Gazette 83/23)**

(51) Int. Cl.⁴: **F 16 K  5/20**, F 16 K  5/06

(54) **ABSPERR- BZW. REGELARMATUR.**

(30) Priorität: **16.03.82  DE 3209402**

(43) Veröffentlichungstag der Anmeldung:
**18.04.84 Patentblatt 84/16**

(45) Bekanntmachung des Hinweises auf die Patenterteilung:
**28.12.88 Patentblatt 88/52**

(84) Benannte Vertragsstaaten:
**AT CH DE FR GB LI NL**

(56) Entgegenhaltungen:
**DE-A- 1 550 226**
**DE-A- 1 550 231**
**DE-A- 2 150 628**
**DE-A- 2 636 459**
**DE-B- 1 060 206**
**GB-A- 1 045 901**

(73) Patentinhaber: **NEMETZ, Josef,**
**Von-Bergmann-Strasse 39, D-6200 Wiesbaden-Bierstadt**
**(DE)**

(72) Erfinder: **NEMETZ, Josef, Von-Bergmann-Strasse 39,**
**D-6200 Wiesbaden-Bierstadt (DE)**

(74) Vertreter: **Quermann, Helmut, Dipl.-Ing.,**
**Postfach 6145 Gustav-Freytag-Strasse 25,**
**D-6200 Wiesbaden (DE)**

**Beschreibung**

Die Erfindung betrifft eine Absperr- bzw. Regelarmatur mit in der Zu- bzw. Abgangsöffnung des Gehäuses eingesetzter, mit vom Betriebsdruck abhängig gegen das Absperrelement wirkender Dichtung, bei der die Dichtung durch eine Dichtungshülse ausgeführt ist, wobei die Dichtungshülse sowohl im abgesperrten als auch im nicht abgesperrten Zustand der Armatur mit der zum Absperrelement hin gerichteten Seite dichtend am Absperrelement anliegt.

Absperr- bzw. Regelarmaturen der genannten Art dienen zum Absperren aber auch Regeln von durch Rohrleitungen strömenden flüssigen und gasförmigen Medien. Das in das Gehäuse eingesetzte Absperrelement kann ein zylindrisches oder kegelförmiges Küken, eine Kugel oder ein Kugelsegment oder auch ein Flachschieber sein. Das Gehäuse weist eine Zugangs- und Abgangsöffnung auf, während das Absperrelement eine Durchbrechung oder Ausnehmung besitzt, die bei geöffneter Armatur die Zugangsöffnung mit der Abgangsöffnung verbindet und bei geschlossener Armatur diese beiden gegeneinander absperrt. Hierbei ist im allgemeinen im Bereich der Zugangsöffnung eine Dichtung angeordnet. Eine solche Dichtung ist auch im allgemeinen um die Abgangsöffnung angeordnet. Als Dichtungen, unabhängig vom Werkstoff, sind im allgemeinen solche mit Eigenelastizität bekannt oder die zum Beispiel mittels Federkraft an das Absperrelement gedrückt werden. Im allgemeinen sind die Dichtungen unmittelbar am Absperrelement angeordnet.

Dichtungen für Absperr- bzw. Regelarmaturen sind auch als Faltenbalgdichtungen bekannt. Diese einen Faltenbalg aufweisenden bekannten Absperr- bzw. Regelarmaturen weisen jedoch den Nachteil auf, dass der Faltenbalg sich ungünstig auf die Strömung auswirkt, nicht totraumfrei ist, was insbesondere von der Lebensmittelindustrie gefordert ist. Bei dickwandigen Faltenbalgausführungen, wie sie beispielsweise aus der DE-A-1 550 231 und der DE-A-2 150 628 bekannt sind, wird durch den Faltenbalg die axiale Kraftübertragung gegenüber dem Absperrelement weitgehend nur aus der Eigenfederung des Faltenbalgs hervorgebracht, wenn man von einer geringfügigen axialen Wirkung absieht, die aus dem anstehenden Betriebsdruck resultiert, der lediglich auf eine Ringfläche wirkt, die zwischen dem äusseren Durchmesser der Innenrille abzüglich des inneren Durchmessers der Innenrille des Faltenbalgs gegeben ist. Bei dünnwandigen Faltenbalgausführungen ist hingegen die Anpresskraft als Vorspannkraft gegenüber dem Absperrelement nur gering. Dies wirkt sich insbesondere bei niederen Temperaturen und/oder niederen Drücken ungünstig auf die Dichtheit aus. Auch ist ein derartiger Faltenbalg druckempfindlich und kann somit bei zu hohem Druck oder Druckstössen Schaden leiden.

Es ist Aufgabe der Erfindung, eine Absperr- bzw. Regelarmatur der genannten Art zu schaffen, die die Temperatur berücksichtigt, bei niederen und hohen Drücken eingesetzt werden kann und gleichzeitig strömungsgünstig und totraumfrei ausgebildet ist, sowie bei Überdruck keinen Schaden leidet.

Gelöst wird die Aufgabe dadurch, dass die Dichtungshülse eine konvex nach der Strömungsmitte gerichtete, in Richtung der benachbarten Innenwand des Gehäuses und von dieser weg federnd, kraftübertragende, flache Bogenlänge aufweist, wobei die Dichtungshülse sich beidseitig der Bogenlänge radial gegen das Gehäuse abstützt und zwischen der federnden Bogenlänge und der Innenwandung der Zu- bzw. der Abgangsöffnung ein gegenüber dem Medium abgedichteter Spalt vorhanden ist.

Erfindungsgemäss ist die Dichtungshülse beidseits der Bogenlänge gegenüber der inneren Wandung des Gehäuses bzw. der Zu- bzw. Abgangsöffnung abgedichtet. An der dem Absperrelement entgegengesetzten Seite stützt sich die Dichtungshülse dabei axial an einem Bund oder Anschlag, Gewindebüchse, Gegenflansch oder ähnlichem ab. Die Stärke bzw. Ausführung der kraftübertragenden, flachen Bogenlänge ist so gewählt, dass bei Druck- und/oder Temperaturänderungen ein mehr oder weniger starkes Andrücken der stirnseitigen Dichtungsfläche der Dichtungshülse an das Absperrelement, bedingt durch eine mehr oder weniger starke Streckung der nicht an der Wand der Zu- bzw. Abgangsöffnung anliegenden federnden Bogenlänge erfolgt. Mit steigendem Druck des Mediums wird die stirnseitige Dichtungsfläche der Dichtungshülse stärker gegen das Absperrelement gedrückt und dadurch die Abdichtung mit steigendem Druck sowohl im abgesperrten als auch nicht abgesperrten Zustand der Armatur verbessert. Durch die Ausbildung der Dichtungshülse mit der federnden Bogenlänge ist eine Hebelwirkung, ähnlich einem Kniehebel, gegeben, wobei die gesamte Bogenlänge als druckbeaufschlagte Wirkfläche anzusehen ist. Bei Überdruck kann sich dabei die Bogenlänge an der Gehäuseinnenwand abstützen, so dass die Wandstärke der Bogenlänge auch optimal dünn ausgeführt werden kann. Die flache Ausbildung der Bogenlänge ermöglicht schliesslich eine weitgehend strömungsgünstige und totraumfreie Anordnung der Dichtungshülse in der Absperr- bzw. Regelarmatur.

Weitere Merkmale der Erfindung sind in den Unteransprüchen dargestellt.

In den Figuren 1 bis 7 ist die Erfindung an Ausführungsformen beispielsweise dargestellt, ohne auf diese Ausführungsformen beschränkt zu sein.

Es stellt dar:

Figur 1 zeigt einen Schnitt durch einen Kugelhahn mit spezifischen Dichtungshülsen,

Figur 2 zeigt einen Schnitt durch eine Absperr- bzw. Regelarmatur mit zylindrischem Küken und mit spezifischen Dichtungshülsen,

Figur 3 zeigt einen Ausschnitt eines Flachschiebers mit spezifischen Dichtungshülsen,

Figur 4 zeigt einen Schnitt einer Armatur mit zylindrischem Küken mit halboffener Ausnehmung und spezifischer Dichtungshülse,

Figur 5 zeigt einen Schnitt durch einen Kugelhahn mit spezifischen Dichtungshülsen,

Figur 6 zeigt einen Ausschnitt aus einem Kugelhahn mit spezifischer Dichtungshülse und

Figur 7 einen Ausschnitt eines Flachschiebers mit zweiteiliger Dichtungshülse.

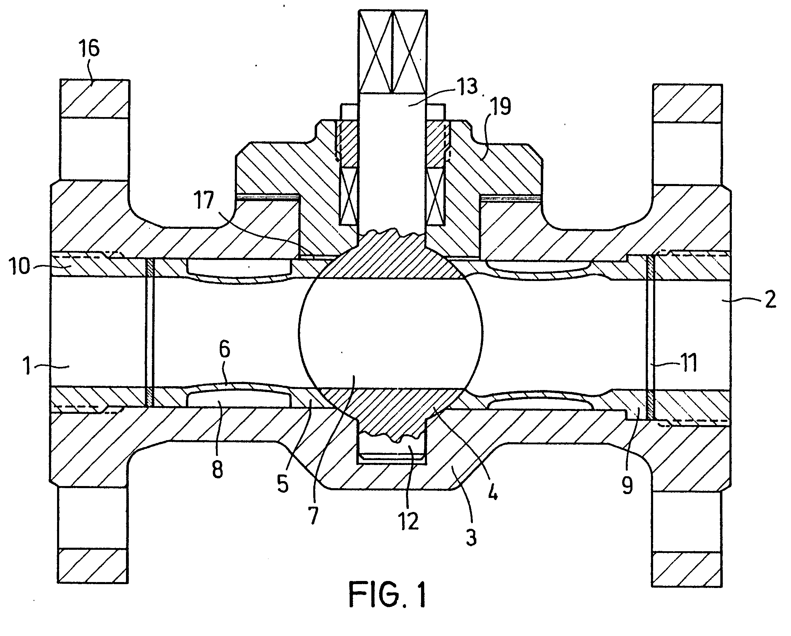

Die Absperr- und Regelarmatur nach der Figur 1 besteht aus dem Gehäuse 3 und dem Absperrelement 3. Das Gehäuse 3 besitzt eine Zugangsöffnung 1, durch die die abzusperrenden, bzw. zu regelnden gasförmigen bzw. flüssigen Medien in die Armatur strömen, und eine Abgangsöffnung 2, durch die bei geöffnetem Absperrelement 4 die gasförmigen bzw. flüssigen Medien wieder abströmen. An beiden Enden besitzt die Armatur Flansche 16, an denen die Rohrleitungen angeschlossen werden. Anstatt Flansche 16 können selbstverständlich auch Gewindeanschlüsse, Schweissenden o. ä. vorgesehen werden. Das Gehäuse 3 besitzt eine Ausnehmung 17, in der das Absperrelement 4, im dargestellten Ausführungsbeispiel eine Kugel mit oberen und unteren Lagerzapfen 12, 13, drehbar eingesetzt ist. Die Ausnehmung 17 im Gehäuse 3 ist durch einen Deckel 19 verschlossen, durch den der obere Lagerzapfen 13 geführt ist. Das Absperrelement 4 besitzt einen Durchgang 7, der in der gezeigten Offenstellung der Armatur die Zugangsöffnung 1 mit der Abgangsöffnung 2 verbindet. In geschlossener Stellung der Armatur steht die Achse des Durchgangs 7 senkrecht zur Achse der Zugangsöffnung 1 bzw. Abgangsöffnung 2. Im Falle einer Regelung des Mediums nimmt die Achse des Durchgangs 7 von Absperrelementen 4 eine Zwischenstellung zwischen offener und geschlossener Stellung des Absperrelementes 4 ein. Zumindest in der Zugangsöffnung 1 ist eine Dichtungshülse 5 eingesetzt, die am Umfang eine konvex nach der Strömungsmitte gerichtete, in Richtung der benachbarten Innenwand des Gehäuses 3 und von dieser weg federnd, kraftübertragende, flache Bogenlänge 6 aufweist. Zwischen der federnden Bogenlänge 6 und der inneren Wandung der Zugangsöffnung 1 bzw. Abgangsöffnung 2 ist ein Spalt 8 vorhanden. Zum Absperrelement 4 hin ist im Anschluss der federnden Bogenlänge 6 die Dichtungshülse 5 stirnseitig passend zum Absperrelement 4 ausgebildet. Zur Flanschseite 16 zu weist im Anschluss der federnden Bogenlänge 6 die Dichtungshülse 5 auf der rechten Seite der Abbildung einen Bund 9 auf, ebenso kann aber auch, wie auf der linken Seite der Abbildung zu sehen ist, die Dichtungshülse 5 ohne Bund ausgeführt sein. Mittels Gewindering 10 wird von der Seite des Flansches 16 die Dichtungshülse 5, sofern ein Bund 9 vorhanden ist, siehe rechte Seite der Abbildung, gegen einen in Zu- bzw. Abgangsöffnung 1, 2 des Gehäuses 3 befindlichen Ansatzes verspannt oder wie auf der linken Seite der Abbildung zu sehen ist, über den Gewindering 10 axial begrenzt. Anstatt eines Gewinderinges kann ebenso z.B. ein Sicherungsring oder ähnlich vorgesehen werden. Die Verspannung oder axiale Begrenzung wird so vorgenommen, dass gleichzeitig eine Vorspannung der Dichtungshülse 5 gegenüber dem Absperrelement 4 gegeben ist. Zweckmässig wird zwischen Gewindering 10 und Dichtungshülse 5 eine Dichtung 11 eingesetzt. Bei einer Dichtungshülse 5 mit Bund 9 kann auch eine Dichtung zwischen Bund 9 und dem in Zu- bzw. Abgangsöffnung 1, 2 des Gehäuse 3 befindlichen Ansatzes vorgesehen werden. Die federnde Bogenlänge 6 kann, wie in der rechten Seite der Abbildung zu sehen ist, mit ihrer äusseren Wandung unmittelbar an der Innenwandung von Zu- bzw. Abgangsöffnung 1, 2 des Gehäuses 3 auslaufen, wobei es keine Querschnittsverengung in Zu- bzw. Abgangsöffnung 1, 2 gibt. Die federnde Bogenlänge 6 der Dichtungshülse 5 kann aber auch, wie in der linken Seite der Abbildung zu sehen ist, mit ihrer äusseren Wandung über einen Radius, Schräge oder Gerade zu der Innenwandung von Zu- bzw. Abgangsöffnung 1, 2 auslaufen. Hierbei kann es jedoch eine geringfügige Querschnittsverengung in Zu- bzw. Abgangsöffnung 1, 2 des Gehäuses 3 geben. Die Dichtungshülse 5 zeigt in Figur 1 eine metallische Ausführung, wobei es zweckmässig ist, Edelstahl vorzusehen. Sie kann aber auch ebenso aus Kunststoff, z.B. aus einem Fluorkunststoff wie Polytetrafluoräthylen oder aus einem anderen Kunststoff bestehen. Ebenso kann die metallische Dichtungshülse 5 zur besseren Dichtwirkung insbesondere an der dem Absperrelement 4 zugekehrten Seite z.B. plattiert, metallisch beschichtet, mit Kunststoff beschichtet sein oder Dichtungseinlagen aus z.B. Weichgraphit, Polytetrafluoräthylen, Kautschuk-Asbest oder ähnlich aufweisen. Die Stärke der federnden Bogenlänge 6 ist dabei jeweils so bemessen, dass sie bei steigendem Betriebsdruck, der auf die federnde Bogenlänge wirkt, eine Streckung ermöglicht und damit eine erhöhte Anpresskraft und somit Dichtwirkung gegenüber dem Absperrelement 4 ausübt. Gleichzeitig kann die federnde Bogenlänge 6 bei entsprechendem Überdruck eine Abstützung an der Innenwand von Ein- bzw. Ausgangsöffnungen 1, 2 des Gehäuses 3 erhalten. Damit sich im Spalt 8 kein Druck aufbauen kann, bzw. das sich eventuell bildende Druckpolster stets geringer als der Vordruck ist, kann es zweckmässig sein, nur die Zugangsöffnung 1 mit einer Dichtungshülse 5 zu versehen. Sofern jedoch das Medium wechselseitig fliesst und die Zu- bzw. Abgangsöffnung 1, 2 je eine Dichtungshülse 5 aufweist, kann es zweckmässig sein, jedoch nicht Bedingung, eine gleitende Abdichtung vor der federnden Bogenlänge 6 zwischen der Innenwand der Zu- bzw. Abgangsöffnung 1, 2 und der äusseren Wandung der Dichtungshülse 5 vorzusehen.

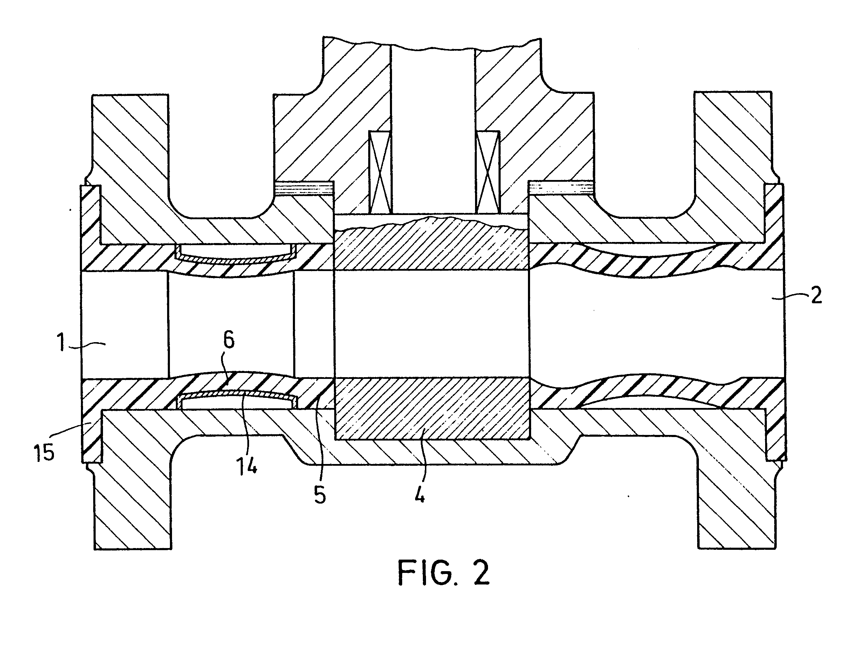

Die Figur 2 zeigt eine Absperr- und Regelarmatur mit einem zylindrischen Absperrelement 4. Weiterhin ist die Dichtungshülse 5 aus Kunststoff, vorzugsweise aus einem Fluorkunststoff z.B. Polytetrafluoräthylen vorgesehen. Auch sind natürlich andere, gegen das Medium resistente Kunststoffe möglich. Die, dem Absperrelement 4 entgegengesetzte Seite der Dichtungshülse 5 ist in diesem Ausführungsbeispiel mit einem Flansch 15 versehen, der gleichzeitig als Dichtung gegenüber dem Gegenflansch und somit als axiale Begrenzung dient. Die Länge der Dichtungshülse 5 ist im, mit dem Gegenflansch verspannten Zustand so bemessen, dass sie eine Vorspannung gegenüber dem Absperrelement 4 ausübt. Wie in der linken Seite der Abbildung zu sehen ist, kann auch eine z.B. vorzugsweise aus Edelstahl bestehende Metallhülse 14, die geschlossen, geteilt oder nur geschlitzt ist, zur Verstärkung der federnden Bogenlänge 6 an der der Innenwand der Zu- bzw. Abgangsöffnung 1, 2 zugekehrten Seite, eingesetzt werden. Die rechte Seite der Abbildung ist ohne eine Verstärkungshülse vorgesehen. Die weitere Wirkungsweise ist wie in Figur 1 gegeben bzw. beschrieben. Die federnde Bogenlänge 6 kann, wie bei allen anderen Ausführungsbeispielen wieder bei entsprechendem Überdruck eine Abstützung an der Innenwand der Zu- bzw. Abgangsöffnung 1, 2 des Gehäuses 3 erhalten.

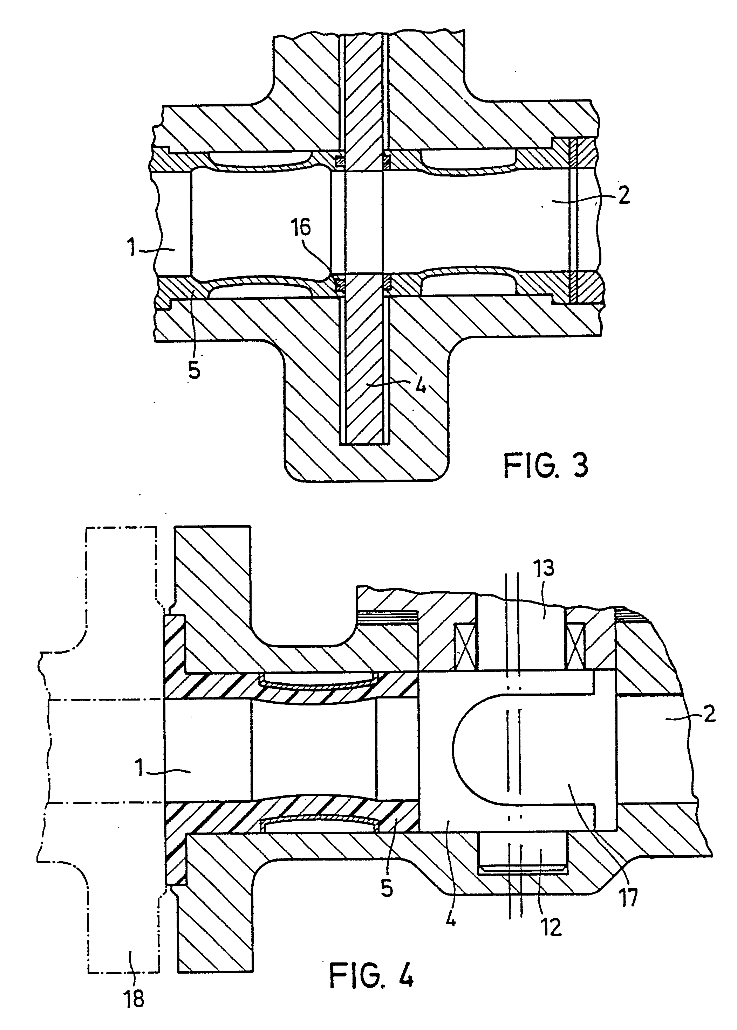

Die Figur 3 zeigt eine Absperr- und Regelarmatur bei der das Absperrelement 4 als Flachschieber ausgebildet ist. Die Dichtungshülse 5 drückt stirnseitig gegen das Absperrelement 4 und besitzt in diesem Ausführungsbeispiel zur besseren Abdichtung an der zum Absperrelement 4 gerichteten Seite eine Dichtungseinlage 16. Diese Dichtungseinlage kann z.B. aus Polytetrafluoräthylen, Reingraphit, IT-Dichtungen oder entsprechend für das Medium geeignet, ähnlich sein. Die linke Hälfte der Abbildung zeigt eine Dichtungseinlage 16 die ringsum gekammert ist, hingegen ist die Dichtungseinlage 16 in der rechten Hälfte der Abbildung nur am äusseren Umfang gefasst. Die weitere Wirkungsweise der Dichtungshülse 5 ist die gleiche, wie bisher beschrieben.

Die Figur 4 zeigt eine Absperr- bzw. Regelarmatur mit einem zylindrischen Absperrelement 4, welches anstatt eines Durchgangs 7 eine Aussparung 17 im Absperrelement 4 aufweist. Weiterhin sind die oberen und unteren Lagerzapfen 12, 13 in diesem Ausführungsbeispiel exzentrisch oder doppelexzentrisch zum Dichtbereich des Absperrelementes 4 ausgeführt. Dies kann jedoch auch ebenso zentrisch ausgeführt werden. Die Dichtungshülse 5 ist entsprechend der Dichtungshülse 5 der linken Seite von Figur 2 ausgeführt und in der Zugangsöffnung 1 eingesetzt und über Gegenflansch 18 axial begrenzt bzw. verspannt. Die Abgangsöffnung 2 weist keine Dichtungshülse auf. Bedingt durch die exzentrische Lagerung des Absperrelementes 4 ergibt sich eine erhöhte Anpresskraft und somit Dichtkraft gegenüber der Dichtungshülse 5. Die Wirkungsweise ist die gleiche, wie bisher beschrieben. Anstatt eines zylindrischen Absperrelementes 4 kann selbstverständlich auch ein solches mit einer Kugel oder einem Kugelsegment treten. Diese verständliche Ausführung ist hier nicht weiter dargestellt.

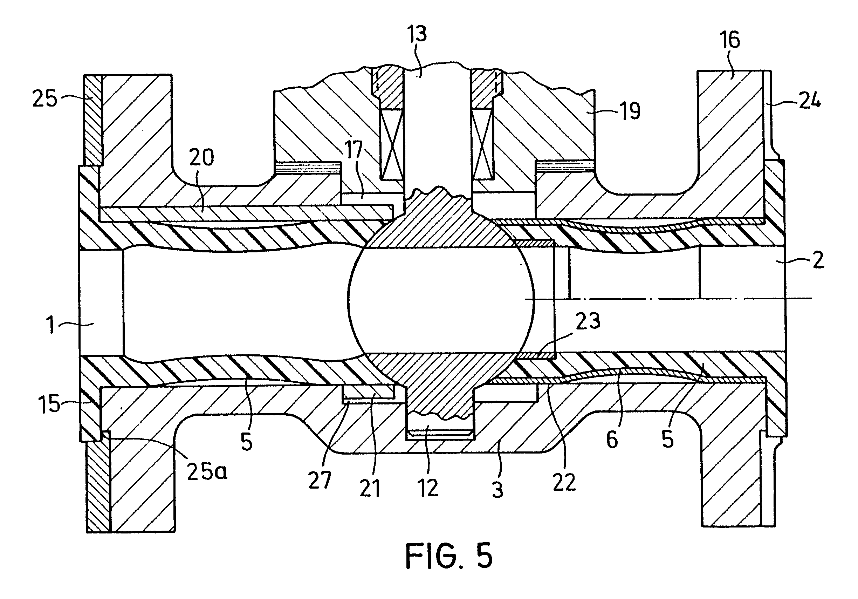

Die Fig. 5 zeigt eine Absperr- bzw. Regelarmatur mit einem Absperrelement 4 als Kugel ähnlich Fig. 1, jedoch ist die Dichtungshülse 5 aus Kunststoff, vorzugsweise aus einem Fluorkunststoff z.B. Polytetrafluoräthylen vorgesehen. Die federnde Bogenlänge 6 ist so gestaltet, dass sie sich bei einem entsprechenden Überdruck an der Innenwand der Zu- bzw. Abgangsöffnung 1, 2 des Gehäuses 3 oder an der darin befindlichen Verstärkungshülse 20 – siehe linke Seite, oben – abstützen kann. Sofern die Dichtungshülse 5 insbesondere aus Kunststoff besteht und der zum Absperrelement 4 gerichtete Teil der Dichtungshülse 5 nicht wie in Fig. 1 zu sehen z.B. über Gehäuse 3 und Deckel 19 bis zum Absperrelement 4 hin gefasst ist, kann auch im Bereich der Ausnehmung 17 im Gehäuse 3 koaxial zur Zugangsöffnung 1 und/oder zur Abgangsöffnung 2 eine Ausdrehung 27 vorgesehen werden, um im Bereich der Ausdrehung 27 die Dichtungshülse 5 mit einem Verstärkungsring 21, vorzugsweise aus Metall z.B. Edelstahl, zu versehen – siehe linke Seite, unten –. Dadurch wird ebenfalls erreicht, dass die Dichtungshülse 5 aus Kunststoff bei hohem Betriebsdruck nicht deformiert wird. Selbstverständlich kann auch anstatt eines Verstärkungsringes 21 eine Verstärkungshülse 20, die sich über die gesamte Länge oder annähernd über die gesamte Länge der Dichtungshülse 5 bis zum Flansch 15 hin erstreckt, vorgesehen werden, wie es in der linken, oberen Hälfte der Fig. 5 zu sehen ist.

Die rechte Hälfte der Fig. 5 zeigt eine Dichtungshülse 5 aus z.B. Polytetrafluoräthylen kombiniert mit einer vorzugsweise metallischen, z.B. aus Edelstahl bestehenden, mit federnder Bogenlänge 6 geprägten bzw. gestalteten Unterstützungshülse 22, die wirtschaftlich z.B. aus einem metallischen Rohrstück oder als Ziehteil oder ähnlich hergestellt werden kann. Die Unterstützungshülse 22 reicht hierbei bis zum Absperrelement 4 hin oder fast bis zum Absperrelement 4. Sie kann auch im Auslauf noch formmässig an das Absperrelement 4 angepasst sein. Auf der zum Flansch 15 zugekehrten Seite reicht die Unterstützungshülse 22 bis zum Flansch 15 oder endet im Bereich von Flansch 15. Die Dichtungshülse 5 wird hierbei sinnvoller Weise z.B. im Spritz- oder Pressverfahren mit der Unterstützungshülse 22 hergestellt, wobei die Unterstützungshülse 22 zur besseren Verankerung auch z.T. perforiert sein kann. Die rechte, obere Hälfte der Fig. 5 zeigt die Dichtungshülse 5 mit gleichbleibender Stärke im Bereich der federnden Bogenlänge 6, wobei sich eine geringfügige Querschnittsverengung in der Zu- bzw. Abgangsöffnung 1, 2 des Gehäuses 3 ergibt. Die rechte, untere Hälfte der Fig. 5 zeigt hingegen einen völlig glatten und geraden Verlauf der inneren Wandung der Dichtungshülse 5, wobei keine Querschnittsverengung in der Zu- bzw. Abgangsöffnung 1, 2 des Gehäuses 3 eintritt. Die Unterstützungshülse 22 kann selbstverständlich auch ringsum ummantelt werden. Um die Dichtungshülse 5 gegen die Strömung zu schützen, ist es auch möglich, wie ebenfalls in der rechten Hälfte der Fig. 5 zu sehen ist, insbesondere im Bereich zum Absperrelement 4 hin oder auch über die gesamte Länge, die Dichtungshülse 5 mit einer an der Innenseite der Dichtungshülse 5 lagegesicherten Hülse 23, vorzugsweise aus Metall z.B. Edelstahl, zu versehen.

Um das Auswechseln der Dichtungshülse 5 bei der Demontage zu erleichtern ist es möglich, wie aus Fig. 5 ersichtlich, im Flansch 16 mindest eine schmale Nut 24 oder dergleichen – siehe rechte Seite der Fig. 5 – bis zum Flansch 15 der Dichtungshülse 5 hin – siehe obere Hälfte, rechts – oder kurz darüber – siehe untere Hälfte, rechts – zu versehen. Um den Kaltfluss des Kunststoffes im Bereich der Nut 24 zu verhindern ist es dann sinnvoll, diese Nut 24 mit einem Nutstein 25 – siehe linke Seite der Fig. 5, oben – zu versehen, wobei der Nutstein 25, sofern sich die Nut 24 bis unter Flansch 15 erstreckt, noch mit einer Nase 25a versehen ist – siehe linke Seite der Fig. 5, unten –. Nach Lösen des Nutsteines 25, der zweckmässiger Weise verschraubt ist, lässt sich z.B. mittels Schraubenzieher die Dichtungshülse 5 entsprechend entfernen. Selbstverständlich ist es auch möglich die Dichtungshülse 5 aus Kunststoff ohne Flansch 15 auszuführen und die Dichtungshülse 5 dann z.B. mittels Gewindering 10, einem Gegenflansch oder ähnlich gegen das Absperrelement 4 hin zu verspannen.

Es ist nicht unbedingt erforderlich, das Absperrelement 4, insbesondere wenn es als Kugel ausgebildet ist, mit Lagerzapfen 12, 13 aus einem Stück zu gestalten. Die Lagerzapfen 12, 13 können z.B. auch mittels Kerbverzahnung oder Nut, insbesondere für die Antriebsseite, in das Absperrelement 4 eingesetzt werden. Auch ist es möglich, auf den unteren Lagerzapfen 12 ganz zu verzichten und die Kugel nach der Ausgangsseite hin über eine Kugelpfanne gegen den von der Dichtungshülse 5 der Eingangsseite wirkenden axialen Druck zu lagern. Die Kugelpfanne kann wie in Fig. 1 ersichtlich z.B. über Gehäuse 3 und Deckel 19 gebildet oder auch als getrenntes Teil in Gehäuse 3 gegen axialen Schub lagegesichert eingelegt werden. Hierbei ist es möglich, diese Kugelpfanne zusätzlich als Dichtung auszubilden. Bei Verwendung einer schwimmenden Kugel und nicht zu hohem Druckbereich genügt bereits die Dichtungshülse 5 in der Abgangsöffnung 2 des Gehäuses 3 als Gegenlager.

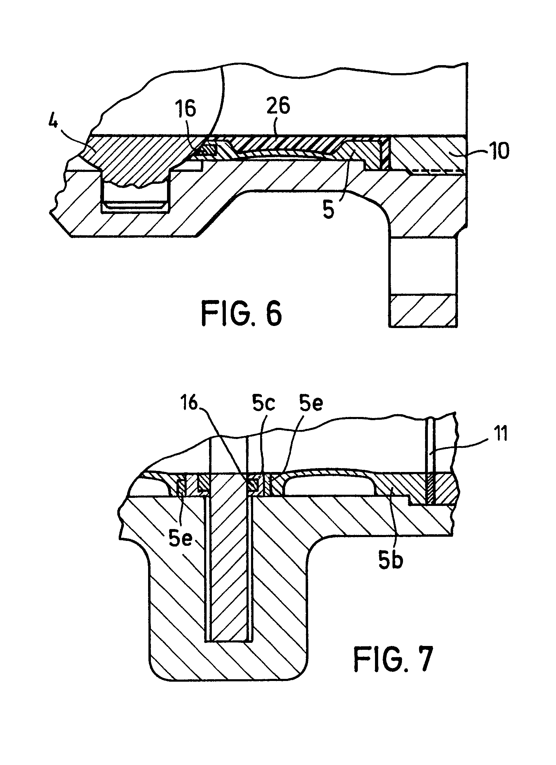

Die Fig. 6 zeigt einen Ausschnitt aus einer Regel- bzw. Absperrarmatur mit einer metallischen Dichtungshülse 5, die mit einer Dichtungseinlage 16 versehen ist und gegen ein Absperrelement 4, welches als Kugel ausgeführt ist, wirkt. Um hierbei einen glatten und geraden Verlauf der inneren Wandung an der Dichtungshülse 5 zu erzielen, kann z.B. im Spritz- oder Pressverfahren die Innenseite mit einer Auskleidung 26 aus einem geeigneten Kunststoff, wie z.B. Polytetrafluoräthylen versehen werden. Diese Auskleidung kann dann auch sinnvoller Weise an einer oder auch an beiden Stirnseiten der Dichtungshülse 5 vorgesehen werden, um gleichzeitig als Dichtung zu wirken. Wesentlich ist u.a., dass die Auskleidung flexibel oder entsprechend nachgiebig ist, damit die Wirkung der federnden Bogenlänge 6 erhalten bleibt. Um einen glatten Verlauf der inneren Wandung von der Dichtungshülse 5 zu erreichen ist es auch möglich die federnde Bogenlänge 6, die, wie auf der rechten Seite der Abb. 1 zu sehen, mehr zur Ein- bzw. Abgangsöffnung 1, 2 des Gehäuses 3 gerichtet ist, mit einer z.B. Metallhülse an der Innenseite der Dichtungshülse 5 zu versehen. Diese Metallhülse ist dann gegenüber der Dichtungshülse 5 nicht abgedichtet, damit der Druck auf die federnde Bogenlänge 6 wirken kann. Sofern die Dichtungshülse 5 an der Innenseite bereits einen glatten Verlauf zeigt, wie es auf der linken Seite der Fig. 1 zu sehen ist, ist es sinnvoll, die federnde Bogenlänge 6 durch eine, vorzugsweise metallische, geteilte Halbschale, die in den Spaltz 8 eingesetzt wird, gegen Überdruck abzustützen.

Anstatt der einstückigen Dichtungshülse 5 mit oder ohne Dichtungseinlage 16, kann selbstverständlich die Dichtungshülse 5 z.B. auch in zwei Teile oder mehrteilig ausgebildet sein, wobei das erste Teil die Dehnungshülse 5b darstellt und das zweite Teil die Dichtung oder ein die Dichtung tragendes Teil 5c. Bei Druckbeanspruchung würde dann die Dehnungshülse 5b gegen die Dichtung bzw. gegen das die Dichtung tragende Teil 5c, wirken und somit eine Anpresskraft gegen das Absperrelement 4 hervorrufen. Diese Ausführung ist insbesondere bei kombinierten Dichtungswerkstoffen, wie z.B. Reingraphit mit Kohle oder Reingraphit eingebettet in Kohle oder einer Metall-Reingraphitverbindung interessant. In einem Kohlering oder in einer Kohlering-Schale, die an einer Seite passend zum Absperrelement 4 ausgebildet ist, befindet sich z.B. eine Nut in die ein Dichtring aus Reingraphit oder ähnlich ringsum gekammert eingesetzt wird, wie z.B. in Fig. 7 rechte Hälfte zu sehen. Die harte Kohle nimmt die von der Dehnungshülse 5b wirkende Anpresskraft auf. Der Dichtring aus Reingraphit, Kautschuk-Asbest-Dichtung oder ähnlich hingegen übernimmt die Dichtfunktion, wobei aber auch die Kohle über die Anpresskraft zu einem Teil der Dichtfunktion beiträgt. Zwischen der Dehnungshülse 5b und der Kohleringschale wird dann wiederum eine Dichtung 5e, z.B. aus Reingraphit vorgesehen, die auch gekammert sein kann. Auch ist es möglich, dass der Kohlering bzw. die Kohleringschale nochmals z.B. metallisch gefasst wird.

Selbstverständlich kann auch die Kohleringschale ohne Nut vorgesehen werden und mit der zum Absperrelement 4 hin gerichteten Seite voll als Dichtung wirken, wobei an der Rückseite wieder z.B. eine Dichtung 5e aus Reingraphit gegenüber der Dehnungshülse 5b vorgesehen wird.

Durch die jeweils aus dem Betriebsdruck resultierende Anpresskraft wird u.a. auch eine relativ lange Lebensdauer der jeweiligen Dichtung erzielt.

Die zum Absperrelement 4 hin gerichtete Seite der Dichtungshülse 5, 5a kann selbstverständlich variabel gestaltet werden. Ausser, dass die Stirnseite der Dichtungshülse 5, 5a jeweils passend zum Absperrelement 4 ausgebildet ist, kann sie auch noch im Auslauf z.B. keilförmig sein, wie in der rechten Hälfte der Abb. 2 zu sehen ist oder die Stirnseite der Dichtungshülse 5, 5a, 5b, 5c kann z.B. mit einer Stufe, Einstich oder dergleichen versehen sein. Auf diese variable Gestaltungsmöglichkeit soll lediglich noch hingewiesen werden.

Die Dichtungshülse 5 ist in allen Ausführungsbeispielen jeweils so gestaltet, dass sie für die Armatur strömungsgünstig und totraumfrei ist.

Anstatt die Dichtungshülse 5, sofern sie aus Metall ist, zu plattieren, zu beschichten oder mit Dichtungseinlagen zu versehen, kann man selbstverständlich auch das Absperrelement 4 plattieren, beschichten, mit Dichtungseinlagen versehen oder ähnlich gestalten.

Um eine individuelle Regelkurve zu erhalten ist es ebenso möglich, die Dichtungshülse 5 an der zum Absperrelement 4 zugekehrten Seite in einer geeigneten Wandstärke mit einem für die Regelung geeigneten kurvenartigen oder in sonstiger geometrischer Gestalt vorgesehenen Durchbruch zu versehen, wobei die stirnseitige Dichtungsfläche zum Absperrelement 4 hin voll die geometrische Form aufweist und somit zur Regelung und Abdichtung ausgebildet ist. Auch kann die Dichtungsfläche zusätzlich beschichtet oder mit einer Dichtungseinlage versehen sein.

Unabhängig von der Ausführung der Dichtungshülse 5 kann das Absperrelement 4 ein zylindrisches oder kegelstumpfförmiges Küken, eine Kugel oder ein Flachschieber sein. Das Absperrelement 4 kann hierbei eine Durchbrechung 7 oder Ausnehmung 17 besitzen bzw. das Absperrelement 4 stellt nur Teile der genannten geometrischen Formen dar und ist in den Konturen bzw. in der äusseren Begrenzung jeweils so gestaltet, dass ein Absperren, Öffnen oder Regeln der Armatur möglich ist.

Die federnde Bogenlänge 6 kann natürlich auch als eine z.B. flachgezogene gekrümmte, dreieckige oder trapezförmige gespannte Verbindung gestaltet sein.

## Patentansprüche

1. Absperr- bzw. Regelarmatur mit in der Zu- (1) bzw. Abgangsöffnung (2) des Gehäuses (3) eingesetzter, mit vom Betriebsdruck abhängig gegen das Absperrelement (4) wirkender Dichtung, bei der die Dichtung durch eine Dichtungshülse (5) ausgeführt ist, wobei die Dichtungshülse (5) sowohl im abgesperrten als auch im nicht abgesperrten Zustand der Armatur mit der zum Absperrelement (4) hin gerichteten Seite dichtend am Absperrelement (4) anliegt, dadurch gekennzeichnet, dass die Dichtungshülse eine konvex nach der Strömungsmitte gerichtete, in Richtung der benachbarten Innenwand des Gehäuses (3) und von dieser weg federnd, kraftübertragende, flache Bogenlänge (6) aufweist, wobei die Dichtungshülse (5) sich beidseitig der Bogenlänge (6) radial gegen das Gehäuse (3) abstützt und zwischen der federnden Bogenlänge (6) und der Innenwandung der Zu- (1) bzw. der Abgangsöffnung (2) ein gegenüber dem Medium abgedichteter Spalt (8) vorhanden ist.

2. Armatur nach Anspruch 1, dadurch gekennzeichnet, dass die Dichtungshülse (5) aus Kunststoff, vorzugsweise aus einem Fluorkunststoff, wie z.B. Polytetrafluoräthylen, besteht.

3. Armatur nach Anspruch 1, dadurch gekennzeichnet, dass die Dichtungshülse (5) aus einem elastischen, metallischen Material, vorzugsweise aus Edelstahl, besteht.

4. Armatur nach einem der Ansprüche 1 bis 3, dadurch gekennzeichnet, dass die Dichtungshülse (5) und/oder das Absperrelement (4) mit einer Dichtungseinlage (16) bzw. mit einem Dichtungsmaterial, wie Reingraphit, Polytetrafluoräthylen, Kautschuk/Asbest o.ä. versehen ist.

5. Armatur nach dem Anspruch 1, dadurch gekennzeichnet, dass die Dichtungshülse (5) aus Kunststoff besteht und zur Verstärkung der federnden Bogenlänge (6) eine geprägte bzw. gestaltete Unterstützungshülse (14, 22), vorzugsweise aus Metall, z.B. Edelstahl, aufweist.

6. Armatur nach Anspruch 5, dadurch gekennzeichnet, dass die Unterstützungshülse (14, 22) innerhalb der Dichtungshülse (5) liegt bzw. ringsum ummantelt ist.

7. Armatur nach Anspruch 5 oder 6, dadurch gekennzeichnet, dass die Unterstützungshülse (14, 22) geschlitzt ist.

8. Armatur nach dem Anspruch 1, dadurch gekennzeichnet, dass die Dichtungshülse (5) in Kombination aus Metall und Kunststoff besteht, wobei der metallische Teil die konvex nach der Strömungsmitte gerichtete, federnde Bogenlänge (6) und der Kunststoffteil an der zur Strömungsmitte gerichteten Seite einen glatten und geraden Verlauf der Wandung aufweist.

9. Armatur nach einem der Ansprüche 1 bis 8, dadurch gekennzeichnet, dass die Dichtungshülse (5) aus mindestens zwei Teilen besteht, und zwar aus einer Dichtungshülse (5b) und einer an dem Absperrelement zugewandten Ende der Dichtungshülse getragenen Dichtung (5c, 5e, 16).

10. Armatur nach einem der Ansprüche 1 bis 9, dadurch gekennzeichnet, dass die Dichtungshülse (5b) beidseits der Bogenlänge mittels Dichtungen (5e, 11) gegenüber dem Gehäuse (3) abgedichtet ist.

11. Armatur nach einem der Ansprüche 1 bis 10, dadurch gekennzeichnet, dass die Dichtungshülse (5) bei Überdruck eine Abstützung an der Innenwand der Ein- bzw. Abgangsöffnung (1, 2) des Gehäuses (3) erhält.

12. Armatur nach einem der Ansprüche 1 bis 11, dadurch gekennzeichnet, dass zum Absperrelement (4) hin im Anschluss an die federnde Bogenlänge (6) die Dichtungshülse (5) stirnseitig passend zum Absperrelement (4) kugelig, radial oder plan ausgebildet ist.

13. Armatur nach einem der Ansprüche 1 bis 12, dadurch gekennzeichnet, dass die Dichtungshülse (5) auf ihrer dem Absperrelement (4) abgewandten Seite zylindrisch ausgebildet ist oder mit einem Bund (9) oder einem Flansch (15) versehen ist.

14. Armatur nach einem der Ansprüche 1 bis 13, dadurch gekennzeichnet, dass sich die Dichtungshülse (5) an der dem Absperrelement (4) entgegengesetzten Seite axial abstützt, insbesondere an einem Bund, Anschlag, Gewindebüchse oder Gegenflansch.

I5. Armatur nach einem der Ansprüche 1 bis 14 mit einem Absperrelement in der Form einer Kugel, dadurch gekennzeichnet, dass die Kugel bzw. das Absperrelement (4) nach der Ausgangsseite hin über eine Kugelpfanne gegen den von der Dichtungshülse (5) der Eingangsseite wirkenden axialen Druck gelagert ist.

16. Armatur nach dem Anspruch 15, dadurch gekennzeichnet, dass die Kugelpfanne über Gehäuse (3) und Deckel (19) gebildet ist.

17. Armatur nach dem Anspruch 15, dadurch gekennzeichnet, dass die Kugelpfanne als getrenntes Teil gegen den axialen Schub lagegesichert in das Gehäuse (3) eingelegt ist.

18. Armatur nach einem der Ansprüche 1 bis 17, dadurch gekennzeichnet, dass der Durchgang (7) des Absperrelementes (4) oder die Dichtungshülse (5) im Bereich an der zum Absperrelement (4) hin gerichteten Seite in einer geeigneten Wandstärke eine für die jeweils gewünschte Regelkurve entsprechende Querschnittsform als Durchbruch aufweist.

## Claims

1. Shut-off and control valve having a seal which is inserted in the inlet (1) and outlet (2) of the housing (3) and acts against the shut-off element (4) as a function of the operating pressure, the seal being designed as a sealing sleeve (5) and the side of the sealing sleeve (5) lying against the shut-off element (4) in sealing manner both when the valve is shut off and when it is not shut off, characterized in that the sealing sleeve has a force-transmitting, flat arc length (6), which, in a convex manner, points towards the centre of flow and which flexes towards and away from the adjacent inner wall of the housing (3), the sealing sleeve (5) being radially supported against the housing (3) on each side of the arc length (6), and a gap (8), which is sealed with respect to the medium, being provided between the resilient arc length (6) and the inner wall of the inlet (1) and the outlet opening (2).

2. Valve according to Claim 1, characterized in that the sealing sleeve (5) is made of plastic, preferably a fluorinated plastic, such as for example polytetrafluoroethylene.

3. Valve according to Claim 1, characterized in that the sealing sleeve (5) is made of an elastic, metallic material, preferably of stainless steel.

4. Valve according to one of Claims 1 to 3, characterized in that the sealing sleeve (5) and/or the shut-off element (4) is provided with a sealing insert (16) or with a sealing material, such as pure graphite, polytetrafluoroethylene, rubber/asbestos or the like.

5. Valve according to Claim 1, characterized in that the sealing sleeve (5) is made of plastic and, to reinforce the resilient arc length (6), has a stamped or shaped support sleeve (14, 22), preferably of metal, e.g. stainless steel.

6. Valve according to Claim 5, characterized in that the support sleeve (14, 22) is located within the sealing sleeve (5) and is completely surrounded.

7. Valve according to Claim 5 or 6, characterized in that the support sleeve (14, 22) is slotted.

8. Valve according to Claim 1, characterized in that the sealing sleeve (5) is made of a combination of metal and plastic, the metallic part having the resilient arc length (6), which points in a convex manner towards the centre of flow, and the plastic part having a smooth and level wall on the side pointing towards the centre of flow.

9. Valve according to one of Claims 1 to 8, characterized in that the sealing sleeve (5) consists of at least two parts, namely a sealing sleeve (5b) and a seal (5c, 5e, 16), which is carried at the sealing sleeve end facing the shut-off element.

10. Valve according to one of Claims 1 to 9, characterized in that the sealing sleeve (5b) is sealed with respect to the housing (3) by means of seals (5e, 11) on each side of the arc length.

11. Valve according to one of Claims 1 to 10, characterized in that, in the case of excess pressure, the sealing sleeve (5) is supported on the inner wall of the inlet and outlet opening (1, 2) of the housing (3).

12. Valve according to one of Claims 1 to 11, characterized in that, towards the shut-off element (4), adjoining the resilient arc length (6), the sealing sleeve (5) is spherical, radial or flat, its end face matching the shut-off element (4).

13. Valve according to one of Claims 1 to 12, characterized in that the sealing sleeve (5) is cylindrical on the side facing away from the shut-off element (4) or is provided with a collar (9) or a flange (15).

14. Valve according to one of Claims 1 to 13, characterized in that the sealing sleeve (5) is axially supported, in particular on a collar, stop, threaded bush or counterflange, on the side opposite to the shut-off element (4).

15. Valve according to one of Claims 1 to 14, having a shut-off element in the form of a ball, characterized in that, towards the outlet side, the ball or shut-off element (4) is mounted via a ball socket against the axial pressure exerted by the sealing sleeve (5) on the inlet side.

16. Valve according to Claim 15, characterized in that the ball socket is formed by the housing (3) and the cover (19).

17. Valve according to Claim 15, characterized in that the ball socket is inserted into the housing (3) as a separate part and is mounted securely against the axial thrust.

18. Valve according to one of Claims 1 to 17, characterized in that, in the region of the side directed towards the shut-off element (4), at a point of suitable wall thickness, the passage (7) of the shut-off element (4) or the sealing sleeve (5) has a perforation having a cross-sectional shape corresponding to the control characteristic required in the particular case.

## Revendications

1. Vanne d'arrêt ou de réglage comportant un orifice d'entrée et un orifice de sortie (1, 2) dans le corps (3) avec un joint d'étanchéité coopérant avec l'élément de fermeture (4) suivant la pression de fonctionnement, l'étanchéité étant assurée par un manchon d'étanchéité (5), ce manchon (5) venant de manière étanche par son côté tourné vers l'élément de fermeture (4) en s'appliquant de manière étanche contre cet élément de fermeture (4) tant à l'état ouvert qu'à l'état fermé de la vanne, vanne caractérisée en ce que le manchon d'étanchéité (5) présente un segment d'arche (6), plat, bombé en direction du milieu de la veine, s'écartant de la paroi intérieure adjacente du corps (3), de manière élastique avec transmission d'efforts, le manchon d'étanchéité (5) s'appuyant des deux côtés du segment d'arche (6) radialement contre le corps (3) et entre le segment d'arche élastique (6) et la paroi intérieure de l'orifice d'entrée et de l'orifice de sortie (1, 2) il subsiste un intervalle (8) rendu étanche vis-à-vis du fluide.

2. Vanne selon la revendication 1, caractérisée en ce que le manchon d'étanchéité (5) est en matière synthétique, de préférence en une matière synthétique fluroée comme par exemple du polytétrafluoréthylène.

3. Vanne selon la revendication 1, caractérisée en ce que le manchon d'étanchéité (5) est en une matière métallique élastique, de préférence en acier inoxydable.

4. Vanne selon l'une des revendications 1 à 3, caractérisée en ce que le manchon d'étanchéité (5) et/ou l'élément de fermeture (4) sont munis d'un insert d'étanchéité (16) ou d'un joint d'étanchéité en graphite pur, en polytétrafluoréthylène, en caoutchouc/amiante ou autres.

5. Vanne selon la revendication 1, caractérisée en ce que le manchon d'étanchéité (5) est en matière synthétique et pour le renforcement du segment d'arche (6), élastique, il comporte un manchon de renforcement (14, 22) matricé ou mis en forme, de préférence en métal tel que l'acier inoxydable.

6. Vanne selon la revendication 5, caractérisée en ce que le manchon de renforcement (14, 22) est intégré au manchon d'étanchéité (5) ou est entouré par celui-ci.

7. Vanne selon la revendication 5 ou 6, caractérisée en ce que le manchon de renforcement (14, 22) est fendu.

8. Vanne selon la revendication 1, caractérisée en ce que le manchon d'étanchéité est formé d'une combinaison de métal et de matière synthétique, la partie métallique correspondant au segment d'arche élastique (6) tourné de manière convexe vers le milieu de la veine et la partie en matière synthétique présente, du côté tourné vers le milieu de la veine, un profil lisse et droit pour sa paroi.

9. Vanne selon l'une des revendications 1 à 8, caractérisée en ce que le manchon d'étanchéité (5) est formé d'au moins deux parties, à savoir d'un manchon d'étanchéité (5b) et d'un joint (5c, 5e, 16) porté par le manchon d'étanchéité au niveau de son extrémité tournée vers l'élément de fermeture (4).

10. Vanne selon l'une des revendications 1 à 9, caractérisée en ce que le manchon d'étanchéité (5b) est rendu étanche de chaque côté du segment d'arche par des joints (5e, 11) assurant l'étanchéité par rapport au corps (3).

11. Vanne selon l'une des revendications 1 à 10, caractérisée en ce qu'en cas de surpression le manchon d'étanchéité (5) est soutenu par la paroi intérieure de l'orifice d'entrée ou de sortie (1, 2) du corps.

12. Vanne selon l'une des revendications 1 à 13, caractérisée en ce que le manchon d'étanchéité (5) s'appuie axialement par le côté opposé à celui correspondant à l'élément de fermeture (4) notamment contre un collet, une butée, un manchon fileté ou une contre-brise.

13. Vanne selon l'une des revendications 1 à 12, caractérisée en ce que du côté opposé à l'élément de fermeture (4) le manchon d'étanchéité (5) est cylindrique ou comporte un collet (9) ou une bride (15).

14. Vanne selon l'une des revendications 1 à 13, caractérisée en ce que du côté opposé à l'élément de fermeture (4) le manchon d'étanchéité (5) s'appuie axialement notamment contre un collet, une butée, un manchon fileté ou une contre-bride.

15. Vanne selon l'une des revendications 1 à 14, comportant un élément de fermeture en forme de bille, caractérisée en ce que la bille ou l'élément de fermeture (4) est monté du côté tourné vers l'extérieur par l'intermédiaire d'une coupelle de rotule agissant contre la pression axiale exercée du côté de l'entrée par le manchon d'étanchéité (5).

16. Vanne selon la revendication 15, caractérisée en ce que la coupelle de rotule est formée par le boîtier (3) et le chapeau (19).

17. Vanne selon la revendication 15, caractérisée en ce que la coupelle est une pièce séparée bloquée en position dans le boîtier (3) contre toute poussée axiale.

18. Vanne selon l'une des revendications 1 à 17, caractérisée en ce que le passage (7) de l'élément de fermeture (4) ou le manchon d'étanchéité (5) présente au niveau du côté tourné vers l'élément de fermeture (4), dans une épaisseur de paroi appropriée, une forme de section constituant un passage et correspondant à la courbe de réglage souhaitée.

FIG. 1

EP 0 105 365 B1

FIG. 2

FIG. 3

FIG. 4

EP 0 105 365 B1

FIG. 5

FIG. 6

FIG. 7